# FASCICULE DE BREVET EUROPEEN

(11) **EP 2 855 860 B1**
(45) Date de publication et mention de la délivrance du brevet: **21.11.2018**
(21) Numéro de dépôt: 13731377.1
(22) Date de dépôt: 30.05.2013
(51) Int. Cl.: F01D 25/28, F01D 25/24

(54) **TURBOMACHINE COMPRENANT UNE CONTRE-PLAQUE**
TURBOMASCHINE MIT EINE GEGENPLATTE
TURBO MACHINE COMPRISING A COUNTER PLATE

(30) Priorité: 05.06.2012 FR 1255229
(43) Date de publication de la demande: 08.04.2015
(73) Titulaire: Safran Aircraft Engines, 75015 Paris (FR)
(72) Inventeur: FILLAUD, Nicolas, F-77550 Moissy-Cramayel Cedex (FR)
(74) Mandataire: Regimbeau
(86) Numéro de dépôt international: PCT/FR2013/051222
(87) Numéro de publication internationale: WO 2014/016480

(56) Documents cités:
- EP-A2- 1 698 761
- EP-A2- 1 927 728
- EP-A2- 1 930 552
- WO-A1-03/044329
- GB-A- 2 442 112
- US-A- 2 628 067

## Description

### Domaine de l'invention

L'invention concerne une contre-plaque, destinée à être disposée entre des brides dans une turbomachine.

L'invention concerne également une turbomachine comprenant une telle contre-plaque.

### Présentation de l'Art Antérieur

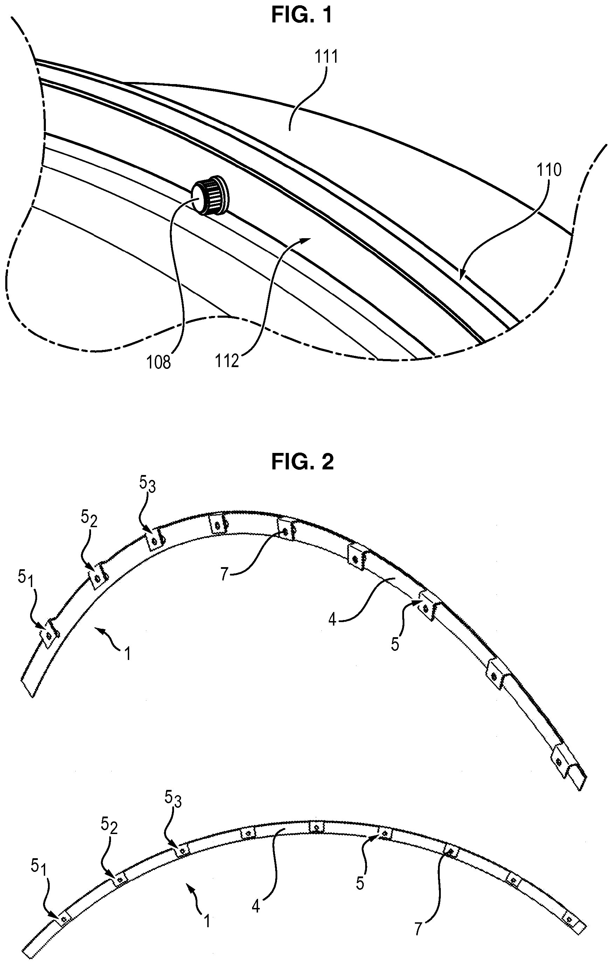

Dans une turbomachine (cf. Figure 1), certaines pièces comportent une bride 110, qui est fixée sur une bride 111 de fixation, en général par l'intermédiaire de vis 108. Ces deux brides sont généralement annulaires, ou réalisent un segment annulaire.

Il s'agit par exemple de la bride 110 d'un carter 112, fixée sur une bride 111 de fixation.

La bride et la bride de fixation comprennent chacune une pluralité de trous, situés en vis-vis, pour permettre le passage de moyens de fixation, comme par exemple des vis de fixation.

La bride de fixation est parfois festonnée. Elle sert dans certains cas à supporter des équipements nécessaires au fonctionnement de la turbomachine. Des supports d'équipement sont ainsi régulièrement boulonnés sur les trous pratiqués dans la bride de fixation.

En opération, des sollicitations mécaniques existent entre la bride et la bride de fixation, notamment en raison des vibrations de la pièce portant la bride.

Ainsi, on observe des dégradations par matage de la surface interne des trous, en particulier des trous de la bride. Ceci résulte notamment du serrage des vis de fixation.

La bride subit elle-même des efforts pouvant l'endommager. Le document EP1698761 décrit un carter interne de turbomachine comprenant deux brides équipées d'un bouclier thermique.

Les solutions visant à pallier ces problèmes incluent par exemple l'accroissement du nombre de vis, afin d'accroître le nombre de zones de serrage. D'autres solutions requièrent l'ajout de rondelles.

La face de la bride, en contact avec la bride de fixation, subit en outre un phénomène de corrosion galvanique. Ceci peut notamment être le cas lorsque la bride de fixation est constituée d'aluminium, et que la pièce portant la bride est en matériau composite.

De même, l'interface située entre les vis permettant de fixer la bride à la bride de fixation et ladite bride est également le siège d'un phénomène de corrosion galvanique.

Il est connu de lutter contre la corrosion galvanique en intercalant des plis de verre collés.

Dans les solutions existant à ce jour, l'ajout de nombreuses pièces rapportées est donc nécessaire pour pallier les divers problèmes précités.

Or, ceci est préjudiciable, puisque la multiplication du nombre de pièces entraîne la multiplication des opérations de fabrication, qui sont parfois complexes. En outre, l'ajout de nouvelles pièces complique les opérations de montage de la turbomachine, comme par exemple les rondelles, qui ne sont pas maintenues en position lorsque les vis de fixation de la bride à la bride de fixation sont retirées.

L'invention vise à proposer une solution simple et efficace aux problèmes précités.

### Présentation de l'invention

A cet effet, l'invention propose une turbomachine comprenant une bride, une bride de fixation sur laquelle la bride est fixée, caractérisée en ce que la turbomachine comprend une contre-plaque, la contre-plaque comprenant une première surface externe et une seconde surface externe, sensiblement parallèles, la première surface externe de la contre-plaque réalisant un anneau continu, ou un segment d'anneau continu, et comprenant une première série de trous pour le passage de moyens de fixation, la seconde surface externe de la contre-plaque comprenant une pluralité de surfaces de support de têtes de moyens de fixation, les surfaces de support comprenant une seconde série de trous, disposées en vis-à-vis de la première série de trous, pour le passage des moyens de fixation à travers les trous de la contre-plaque, la première surface externe de la contre-plaque étant constituée d'un matériau permettant d'empêcher la corrosion galvanique susceptible de se créer entre la bride et la bride de fixation, et la première surface externe séparant la bride et la bride de fixation.

L'invention est avantageusement complétée par les caractéristiques suivantes, prises seules ou en une quelconque de leur combinaison techniquement possible :
- la seconde surface externe de la contre-plaque est constituée d'un matériau permettant d'empêcher la corrosion galvanique susceptible de se créer entre les moyens de fixation et la bride;
- la seconde surface externe est une surface continue ;
- la seconde surface externe est une surface discontinue ;
- la seconde surface externe est une surface festonnée, dont les festons sont les surfaces de support de têtes de moyens de fixation ;
- la première et la seconde surfaces externes sont espacées de sorte à ce que la contre-plaque enserre la bride ;
- la bride est fixée à la bride de fixation par l'intermédiaire de moyens de fixation traversant les trous de la première et de la seconde surfaces externes de la contre-plaque.

L'invention permet de résoudre à la fois le problème du matage et les problèmes de corrosion galvanique, par l'intermédiaire d'une unique pièce.

En outre, l'invention simplifie les opérations de montage/démontage.

### Présentation des figures

D'autres caractéristiques et avantages de l'invention ressortiront encore de la description qui suit, laquelle est purement illustrative et non limitative, et doit être lue en regard des dessins annexés sur lesquels :
- la Figure 1, déjà commentée, représente une turbomachine comprenant une pièce et une bride de fixation, de l'art antérieur ;
- la Figure 2 est une représentation d'un mode de réalisation d'une contre-plaque selon l'invention ;
- la Figure 3 est une représentation en coupe d'une section d'une contre-plaque selon un mode de réalisation de l'invention ;
- la Figure 4 représente une turbomachine comprenant une contre-plaque intercalée entre une pièce et une bride de fixation d'une turbomachine, selon un mode de réalisation de l'invention;
- la Figure 5 est une vue en coupe de la Figure 4 ;
- la Figure 6 est une représentation d'un autre mode de réalisation d'une contre-plaque selon l'invention.

### Description détaillée

La Figure 2 est une représentation d'un mode de réalisation d'une contre-plaque 1 selon l'invention.

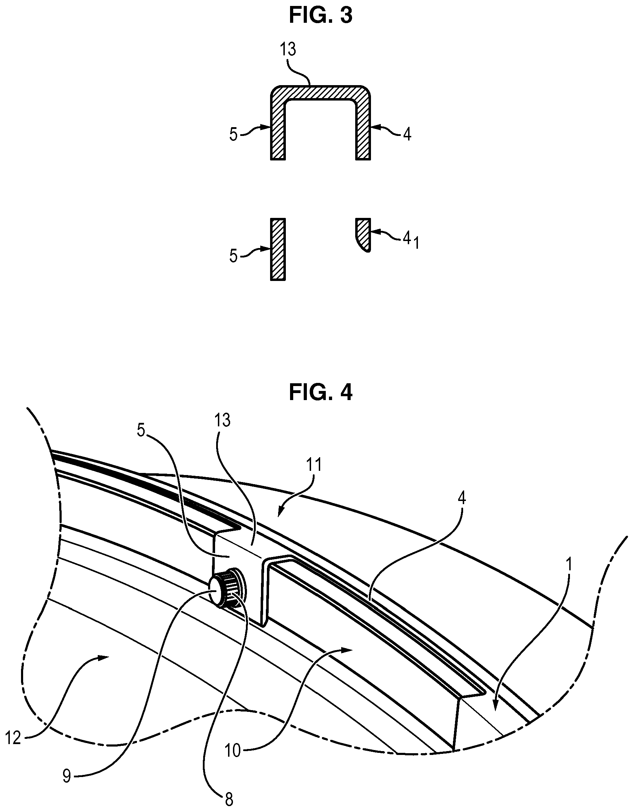

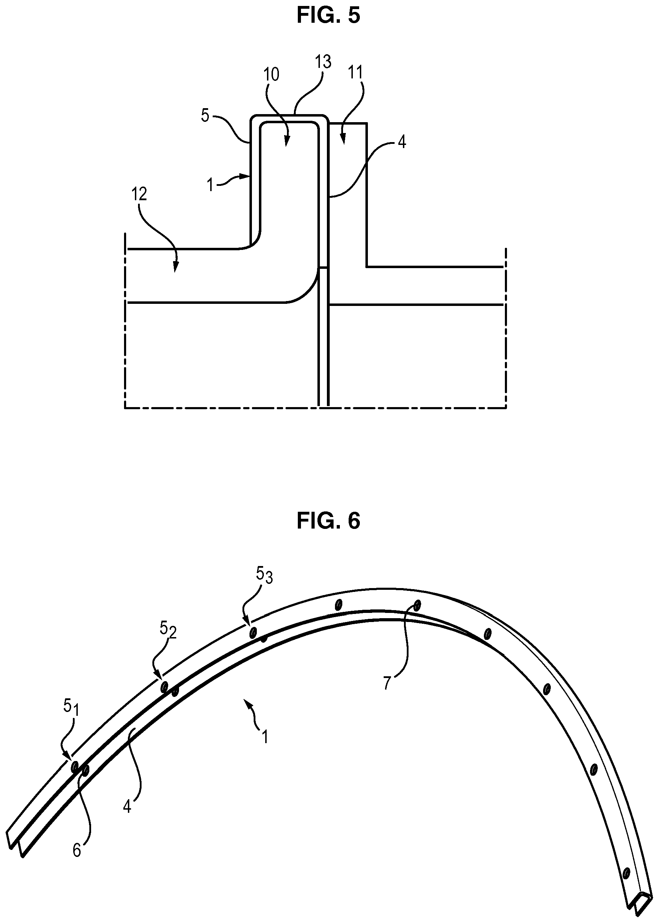

Comme illustré en Figures 4 et 5, cette contre-plaque est destinée à être disposée entre des brides 10, 11 dans une turbomachine.

La bride 10 est la bride d'une pièce 12, ladite bride 10 devant être fixée à une bride 11 de fixation. La pièce 12 est par exemple, mais non limitativement, un carter de la turbomachine.

Les brides sont en général des pièces de fixation annulaires ou de révolution.

La contre-plaque 1 comprend une première surface 4 externe et une seconde surface 5 externe.

Ces surfaces 4, 5 sont liées de sorte à former une section en forme de U. On entend par forme de U le fait que les surfaces 4, 5 soient sensiblement parallèles (à la manière des deux barres verticales d'un « U »), et jointes par une surface de jonction 13 (à la manière de la barre horizontale d'un « U »).

Ainsi, la section de la contre-plaque n'est pas nécessairement strictement identique à un U, dans la mesure où les sections en coupe des surfaces 4, 5 peuvent présenter des longueurs différentes.

Dans un mode de réalisation, on augmente la surface de contact entre la première surface 4 externe et la bride 10. Ceci peut notamment être réalisé en disposant une patte 4₁ de contact à l'extrémité de la première surface externe de la contre-plaque, qui vient en appui contre la bride 10 (cf. Figure 3). Cette patte 4₁ présente en général une extrémité incurvée. Ceci permet un renforcement mécanique de la bride 10 vis-à-vis des efforts subis.

La première surface 4 externe de la contre-plaque 1 réalise un anneau continu, ou un segment d'anneau continu. Cette première surface 4 externe comprend une première série 6 de trous pour le passage de moyens 8 de fixation. Ces trous ne sont pas nécessairement espacés de manière régulière, et peuvent en outre présenter des dimensions et/ou des formes différentes entre eux. Les moyens 8 de fixation sont par exemple, mais non limitativement, des vis ou des rivets.

La seconde surface 5 externe de la contre-plaque 1 comprend une pluralité de surfaces 5₁, 5₂, 5₃,... de support de têtes 9 de moyens de fixation.

Les surfaces 5₁, 5₂, 5₃... de support comprennent une seconde série 7 de trous, disposées en vis-à-vis de la première série 6 de trous, pour le passage des moyens 8 de fixation à travers la contre-plaque 1.

Ces surfaces de support sont configurées pour supporter les têtes 9 des moyens 8 de fixation destinées à traverser les trous 6, 7 de la contre-plaque.

La seconde surface 5 externe peut être continue, comme illustrée en Figure 6. Dans ce cas, les différentes surfaces 5₁, 5₂, 5₃... de support sont jointives. La seconde surface 5 externe décrit alors un anneau ou un segment d'anneau continu.

Alternativement, la seconde surface 5 externe est une surface discontinue. Dans ce cas, les différentes surfaces 5₁, 5₂, 5₃... de support ne sont pas jointives, et sont espacées les unes des autres. Cette configuration permet un gain de masse par réduction de la matière utilisée.

Une solution mixte, comprenant des portions continues de la seconde surface 5 externe, et des portions discontinues, est également possible.

Dans un mode de réalisation, la seconde surface 5 externe est une surface festonnée (cf. Figures 2 et 4), dont les festons sont les surfaces (5₁, 5₂, 5₃...) de support de têtes de moyens de fixation. La forme des surfaces de support peut varier : il peut s'agir de découpes rectangulaires, carrés, triangulaires, ou toute autre forme géométrique adaptée au support des têtes de moyens de fixation.

Les surfaces de support peuvent présenter des géométries et/ou des dimensions différentes entre elles.

Comme déjà mentionné, un problème rencontré dans la fixation de la bride est le phénomène de corrosion galvanique.

La corrosion galvanique est observée si les trois conditions suivantes sont simultanément satisfaites :
- deux métaux de nature différente (ou un métal et un matériau plus noble ou plus conducteur comme le carbone). Ils forment les électrodes du système : le plus noble est la cathode, et est le siège des réactions de réduction ; le moins noble est l'anode, et est le siège de l'oxydation. La différence de potentiel, d'au moins 100 mV, est à l'origine des réactions d'oxydo-réduction.
- un électrolyte en contact avec les deux phases. Sa présence assure le transport des espèces ioniques, et donc du courant dans le milieu liquide.
- un contact électrique entre les deux matériaux. Cette continuité électrique assure le transport des électrons entre les deux phases.

Dans un mode de réalisation, au moins la première surface 4 externe est constituée d'un matériau ne générant pas de corrosion galvanique. En particulier, le matériau de la première surface 4 externe est choisi pour empêcher la corrosion galvanique susceptible de se créer entre la bride 10 et la bride 11 de fixation.

Il s'agit par exemple, mais non limitativement, du matériau TA6V, ou d'un alliage de titane. Ce matériau est isolé par un film neutre (couche de passivation), créé naturellement en surface, par contact avec l'air, qui stoppe la corrosion galvanique. D'autres matériaux sont possibles, comme par exemple des plis de verre.

En général, la bride 11 de fixation est en métal, comme par exemple de l'aluminium, et la bride 10 est en carbone ou fibres de carbone.

D'autres exemples de matériaux pour la première 4 surface externe incluent :
- des éléments non conducteurs tels que des matériaux plastiques ou composites à fibre de verre ;
- le titane, certains matériaux « Inconel », les alliages NiCrMo ou des aciers inoxydables. Ces matériaux ont une faible différence de potentiel avec le carbone.

Selon un aspect possible, une anodisation est réalisée. En particulier, si la première surface est en titane, et que la bride de fixation est en aluminium, le titane est anodisé. Ceci permet de renforcer l'isolation des éléments du point de vue de la corrosion galvanique.

Dans le cas du couple carbone/aluminium, l'aluminium est anodisé (abrasion du carbone vis-à-vis de l'aluminium).

Dans un mode de réalisation, la seconde surface 5 externe de la contre-plaque est constituée d'un matériau permettant d'empêcher la corrosion galvanique susceptible de se créer entre les moyens 8 de fixation et la bride 10. Des matériaux identiques à ceux décrits pour la première 4 surface externe peuvent être utilisés.

Les Figures 4 et 5 représentent une turbomachine comprenant :
- une bride 10 d'une pièce 12, et
- une bride 11 de fixation, sur laquelle la bride 10 est fixée.

La bride 11 de fixation sert dans certains cas à supporter des équipements nécessaires au fonctionnement de la turbomachine. Des supports d'équipement sont ainsi régulièrement boulonnés sur les trous pratiqués dans la bride 11 de fixation.

La turbomachine comprend la contre-plaque 1 telle que décrite précédemment, disposée entre la bride 10 et la bride 11 de fixation. La contre-plaque 1 est intercalée entre la bride 10 et la bride 11 de fixation.

En particulier, la première 4 surface externe recouvre la surface de la bride 10 en contact avec la bride 11 de fixation. Ainsi, la bride 10 n'est plus en contact direct avec la bride 11 de fixation.

La première surface 4 externe sépare la bride 10 de la bride 11 de fixation.

En outre, les moyens 8 de fixation lient la bride 10 avec la bride 11 de fixation, et traversent les trous 6, 7 de la première surface 4 externe et de la seconde surface 5 externe.

Dans un mode de réalisation, la première et la seconde surfaces 4, 5 externes sont espacées de sorte à ce que la contre-plaque 1 enserre la bride 10. En particulier, les surfaces externes 4, 5 de la contre-plaque 1 enserrent la bride 10.

Ceci permet de maintenir la contre-plaque 1 en position même si les moyens 8 de fixation sont retirés ou absents.

D'une part, la contre-plaque 1 permet une séparation entre la bride 10 et la bride 11 de fixation.

Comme mentionné précédemment, la première surface 4 externe de la contre-plaque est constituée d'un matériau permettant d'empêcher la corrosion galvanique susceptible de se créer entre la bride 10 et la bride 11 de fixation.

Selon un aspect, la seconde surface 5 externe de la contre-plaque est constituée d'un matériau permettant d'empêcher la corrosion galvanique susceptible de se créer entre les moyens 8 de fixation et la bride 10. En particulier, la seconde surface 5 sépare les têtes 9 des moyens 8 de fixation de la bride 10.

Par un choix approprié du matériau de la première 4 surface externe et de la seconde surface 5 externe, les problèmes de corrosion galvanique sont supprimés.

En outre, la contre-plaque 1 permet d'éviter le problème du matage des trous 7 de la bride 10, grâce aux surfaces 5₁, 5₂,... de support de têtes de moyens de fixation. Les frottements entre les moyens de fixation et les surfaces des trous sont donc réduits.

De plus, lorsque la contre-plaque 1 présente une configuration où elle enserre la bride 10, la contre-plaque 1 est maintenue en position même durant les opérations de montage/démontage des moyens 8 de fixation et des éléments fixés à la bride 11 de fixation de la turbomachine. Les opérations de montage/démontage sont donc simplifiées.

La contre-plaque permet, grâce à une unique pièce, de résoudre plusieurs problèmes techniques, ce qui réduit les coûts, la complexité, et les opérations d'entretien de la turbomachine.

## Revendications

1. Turbomachine comprenant :
- une bride (10),
- une bride (11) de fixation sur laquelle la bride (10) est fixée,
**caractérisée en ce que** la turbomachine comprend une contre-plaque (1),
- la contre-plaque (1) comprenant une première surface (4) externe et une seconde surface (5) externe, sensiblement parallèles;
- la première surface (4) externe de la contre-plaque (1) réalisant un anneau continu, ou un segment d'anneau continu, et comprenant une première série (6) de trous pour le passage de moyens (8) de fixation ;
- la seconde surface (5) externe de la contre-plaque (1) comprenant une pluralité de surfaces (5₁, 5₂, 5₃...) de support de têtes (9) de moyens de fixation, les surfaces (5₁, 5₂, 5₃...) de support comprenant une seconde série (7) de trous, disposées en vis-à-vis de la première série (6) de trous, pour le passage des moyens (8) de fixation à travers les trous (6, 7) de la contre-plaque (1) ;
- la première surface (4) externe de la contre-plaque étant constituée d'un matériau permettant d'empêcher la corrosion galvanique susceptible de se créer entre la bride (10) et la bride (11) de fixation, et
- la première surface (4) externe séparant la bride (10) et la bride (11) de fixation.

2. Turbomachine selon la revendication 1, dans laquelle la seconde surface (5) externe de la contre-plaque est constituée d'un matériau permettant d'empêcher la corrosion galvanique susceptible de se créer entre les moyens (8) de fixation et la bride (10).

3. Turbomachine selon l'une des revendications 1 ou 2, dans laquelle la seconde surface (5) externe est une surface continue.

4. Turbomachine selon l'une des revendications 1 ou 2, dans laquelle la seconde surface (5) externe est une surface discontinue.

5. Turbomachine selon la revendication 4, dans laquelle la seconde (5) surface externe est une surface festonnée, dont les festons sont les surfaces (5₁, 5₂, 5₃...) de support de têtes de moyens (8) de fixation.

6. Turbomachine selon l'une des revendications 1 à 5, dans laquelle la première et la seconde surfaces (10, 11) externes sont espacées de sorte à ce que la contre-plaque (1) enserre la bride (11).

7. Turbomachine selon l'une des revendications 1 à 6, dans laquelle la bride (10) est fixée à la bride (11) de fixation par l'intermédiaire de moyens (8) de fixation traversant les trous de la première et de la seconde surfaces externes (4, 5) de la contre-plaque (1).

## Patentansprüche

1. Turbomaschine, umfassend:
- einen Flansch (10),
- einen Befestigungsflansch (11), auf welchem der Flansch (10) befestigt ist,
**dadurch gekennzeichnet, dass** die Turbomaschine eine Gegenplatte (1) umfasst,
- wobei die Gegenplatte (1) eine äußere erste Fläche (4) und eine äußere zweite Fläche (5) umfasst, die etwa parallel sind;
- wobei die äußere erste Fläche (4) der Gegenplatte (1) einen kontinuierlichen Ring oder ein kontinuierliches Ringsegment beschreibt und eine erste Reihe (6) Löcher für den Durchgang von Befestigungsmitteln (8) umfasst;
- wobei die äußere zweite Fläche (5) der Gegenplatte (1) eine Vielzahl von Stützflächen (5₁, 5₂, 5₃...) von Köpfen (9) von Befestigungsmitteln umfasst, wobei die Stützflächen (5₁, 5₂, 5₃...) eine zweite Reihe (7) Löcher umfassen, die gegenüber der erste Reihe (6) Löcher für den Durchgang der Befestigungsmittel (8) durch die Löcher (6, 7) der Gegenplatte (1) angeordnet sind;
- wobei die äußere erste Fläche (4) der Gegenplatte aus einem Material gebildet ist, das erlaubt, die galvanische Korrosion zu verhindern, die zwischen dem Flansch (10) und dem Befestigungsflansch (11) auftreten könnte, und
- wobei die äußere erste Fläche (4) den Flansch (10) und den Befestigungsflansch (11) trennt.

2. Turbomaschine nach Anspruch 1, wobei die äußere zweite Fläche (5) der Gegenplatte aus einem Material gebildet ist, das erlaubt, die galvanische Korrosion zu verhindern, die zwischen den Befestigungsmitteln (8) und dem Flansch (10) auftreten könnte.

3. Turbomaschine nach einem der Ansprüche 1 oder 2, wobei die äußere zweite Fläche (5) eine kontinuierliche Fläche ist.

4. Turbomaschine nach einem der Ansprüche 1 oder 2, wobei die äußere zweite Fläche (5) eine diskontinuierliche Fläche ist.

5. Turbomaschine nach Anspruch 4, wobei die äußere zweite Fläche (5) eine gesäumte Fläche ist, wobei die Säume die Stützflächen (5₁, 5₂, 5₃...) von Köpfen von Befestigungsmitteln (8) sind.

6. Turbomaschine nach einem der Ansprüche 1 bis 5, wobei die äußere erste und zweite Fläche (10, 11) derart beabstandet sind, dass die Gegenplatte (1) den Flansch (11) umschließt.

7. Turbomaschine nach einem der Ansprüche 1 bis 6, wobei der Flansch (10) an dem Befestigungsflansch (11) mit Hilfe von Befestigungsmitteln (8) befestigt ist, die die Löcher der äußeren ersten und zweiten Fläche (4, 5) der Gegenplatte (1) durchqueren.

## Claims

1. A turbomachine including:
- a flange (10),
- a mounting flange (11) to which the flange (10) is mounted,
**characterized in that** the turbomachine includes a counter-plate (1),
- the counter-plate (1) including a first outer surface (4) and a substantially parallel second outer surface (5);
- the first outer surface (4) of the counter-plate (1) forming an continuous ring, or a continuous ring segment, and including a first series (6) of holes for passage of fastening means (8) ;
- the second outer surface (5) of the counter-plate (1) including a plurality of surfaces support (5₁, 5₂, 5₃...) for the heads (9) of fastening means, the support surfaces (5₁, 5₂, 5₃...) including a second series (7) of holes, arranged facing the first series (6) of holes, for passage of the fastening means (8) through the holes (6, 7) of the counter-plate (1);
- the first outer surface (4) of the counter-plate consisting of a material allowing prevention of the galvanic corrosion which can occur between the flange (10) and the mounting flange (11), and
- the first outer surface (4) separating the flange (10) and the mounting flange (11).

2. The turbomachine according to Claim 1, wherein the second outer surface (5) of the counter-plate consists of a material allowing prevention of the galvanic corrosion which can occur between the fastening means (8) and the flange (10).

3. The turbomachine according to one of Claims 1 or 2, wherein the second outer surface (5) is a continuous surface.

4. The turbomachine according to one of Claims 1 or 2, wherein the second outer surface (5) is a discontinuous surface.

5. The turbomachine according to Claim 4, wherein the second outer surface (5) is a scalloped surface, the scallops whereof are the support surface (5₁, 5₂, 5₃...) for the heads of the fastening means (8).

6. The turbomachine according to one of Claims 1 to 5, wherein the first and the second outer surfaces (10, 11) are spaced so that the counter-plate (1) grips the flange (11).

7. The turbomachine according to one of Claims 1 to 6, wherein the flange (10) is mounted on the mounting flange (11) by attachment means (8) passing through holes in the first and in the second outer surfaces (4, 5) of the counter-plate (1).
